# EUROPEAN PATENT APPLICATION

(11) **EP 3 725 586 A1**
(43) Date of publication of application: **21.10.2020**
(21) Application number: 18889612.0
(22) Date of filing: 12.12.2018
(51) Int. Cl.: B60N 2/02, B60R 16/037

(54) **METHOD AND SYSTEM FOR CONTROLLING VEHICLE SEAT, AND APPLICATION PROGRAM FOR MOBILE TERMINAL**

(30) Priority: 15.12.2017 CN 201711352678
(71) Applicant: Nio Nextev Limited, Hong Kong (CN)
(72) Inventor: LI, Bin, Shanghai 201804 (CN); LI, Tianshu, Shanghai 201804 (CN); GONG, Haining, Shanghai 201804 (CN); YU, Bin, Shanghai 201804 (CN); JIN, Bei, Shanghai 201804 (CN); FU, Litao, Shanghai 201804 (CN); DONG, Yiwei, Shanghai 201804 (CN); WANG, Jingjie, Shanghai 201804 (CN)
(74) Representative: Patentwerk B.V.
(86) International application number: PCT/CN2018/120433
(87) International publication number: WO 2019/114719

(57) **Abstract**

Disclosed are a method and system for controlling a vehicle seat, and an application for a mobile terminal. The invention is aimed to solve the problem that a state of an existing vehicle seat must be adjusted by physical buttons arranged near the seat, causing inconvenience to a user during operation. To this end, the method for controlling a vehicle seat comprises: acquiring a control signal from a first control terminal, such that a seat controller can determine, through the control signal, a specific state that a user wants to adjust; and then selectively adjusting the state of the seat according to the control signal from the first control terminal. Since different influential factors need to be taken into consideration when the seat controller adjusts different states of the seat, the seat controller also needs to determine, after acquiring the specific state that the user wants to adjust, whether other influential factors need to be acquired when the state is adjusted, such that a comfortable riding experience of a passenger can be effectively ensured while facilitating the user operation.

## Description

### Technical Field

The invention relates to the technical field of vehicles, and in particular to a method and system for controlling a vehicle seat, and an application for a mobile terminal.

### Background Art

With the continuous improvement of people's living standards, vehicles have gradually become an indispensable part of people's daily life. At the same time, with the rapid development of the vehicle industry, users begin to place higher and higher requirements for the degree of intelligent control of vehicles. Specifically, more and more users desire that the state of a vehicle seat can be adjusted by a mobile terminal, such that the users can adjust the state of the vehicle seat while keeping in a normal riding posture. This adjustment method is easier for the users to operate and is also more conducive to the users to adjust the vehicle seat to the most comfortable state.

Further, the state of an existing vehicle seat is controlled by physical buttons arranged near the seat, so the user must adjust the state of the vehicle seat by operating the physical buttons. This adjustment method causes many inconveniences in actual operations. For example, when a passenger who is not in the seat wants to adjust the seat, he or she must move close to the seat to operate the adjustment buttons for the seat. In addition, the passenger in the seat cannot adjust the state of the seat while keeping in a normal riding posture. Therefore, the passenger may need to get up and adjust the buttons for the seat multiple times to find the most comfortable seat state for himself/herself.

Accordingly, there is a need in the art for a new method and system for controlling a vehicle seat and an application for a mobile terminal to solve the above problems.

### Summary of the Invention

To solve the above problems in the prior art, that is, to solve the problem that a state of an existing vehicle seat must be adjusted by physical buttons arranged near the seat, causing inconvenience to a user during operation, the invention provides a method for controlling a vehicle seat, the control method comprising the following steps: acquiring a control signal from a first control terminal; and selectively adjusting a state of the seat according to the control signal from the first control terminal; wherein the first control terminal has a touch screen for operating by a user to generate the control signal.

In the technical solution of the above method for controlling a vehicle seat, the step of selectively adjusting the state of the seat according to the control signal from the first control terminal comprises: adjusting a longitudinal position of the seat according to the control signal if the control signal is to adjust the longitudinal position of the seat.

In the technical solution of the above method for controlling a vehicle seat, the step of selectively adjusting the state of the seat according to the control signal from the first control terminal comprises: adjusting a height position of the seat according to the control signal if the control signal is to adjust the height position of the seat.

In the technical solution of the above method for controlling a vehicle seat, the seat comprise a leg rest, and the step of selectively adjusting the state of the seat according to the control signal from the first control terminal comprises: adjusting the position of the leg rest according to the control signal if the control signal is to adjust the position of the leg rest.

In the technical solution of the above method for controlling a vehicle seat, the seat comprise a backrest, and the step of selectively adjusting the state of the seat according to the control signal from the first control terminal comprises: adjusting a folding angle of the backrest according to the control signal if the control signal is to adjust the folding angle of the backrest.

In the technical solution of the above method for controlling a vehicle seat, the seat comprise a backrest, and the control method further comprises: acquiring an occupancy state of the seat before, during or after the step of acquiring the control signal from the first control terminal; and the step of selectively adjusting the state of the seat according to the control signal from the first control terminal comprises: adjusting the backrest to a predetermined folding angle if the control signal is to adjust a folding angle of the backrest and the seat is in an unoccupied state; and maintaining the backrest at the current folding angle if the control signal is to adjust the folding angle of the backrest and the seat is in an occupied state.

In the technical solution of the above method for controlling a vehicle seat, the seat is provided with a pressure sensor and/or an infrared sensor, and the step of acquiring the occupancy state of the seat comprises: detecting the occupancy state of the seat by the pressure sensor and/or the infrared sensor.

In the technical solution of the above method for controlling a vehicle seat, the first control terminal is a mobile terminal and/or a vehicle human-machine interaction system; and the step of acquiring the control signal from the first control terminal specifically comprises: acquiring the control signal from the mobile terminal and/or the vehicle human-machine interaction system.

The invention also provides a system for controlling a vehicle seat, the control system comprising a seat controller, wherein the seat controller is able to carry out a method for controlling a vehicle seat described in any one of the above technical solutions.

The invention also provides an application for a mobile terminal, wherein the application is used to send to a vehicle a control signal for adjusting a state of a seat of the vehicle.

It may be understood by those skilled in the art that, in the technical solutions of the invention, the system for controlling a vehicle seat of the invention comprises a seat controller, and the control method comprises: acquiring the control signal from the first control terminal, such that the seat controller can acquire the specific state that the passenger wants to adjust; and then selectively adjusting the state of the seat according to the control signal from the first control terminal. Since different influential factors need to be taken into consideration when the seat controller adjusts different states of the seat, the seat controller also needs to further determine, after the seat controller acquires the specific state that the user wants to adjust, whether other influential factors need to be acquired when the state of the seat is adjusted, such that a comfortable riding experience of a passenger can be effectively ensured while facilitating the user operation.

### Brief Description of the Drawings

Fig. 1 is a flowchart of the main steps of a method for controlling a vehicle seat of the invention;
Fig. 2 is a flowchart of steps of a first embodiment of the method for controlling a vehicle seat of the invention;
Fig. 3 is a flowchart of steps of a second embodiment of the method for controlling a vehicle seat of the invention;
Fig. 4 is a flowchart of steps of a third embodiment of the method for controlling a vehicle seat of the invention;
Fig. 5 is a flowchart of steps of a fourth embodiment of the method for controlling a vehicle seat of the invention; and
Fig. 6 is a flowchart of steps of a fifth embodiment of the method for controlling a vehicle seat of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although each step of the method of the invention is described in a specific order in this application, these orders are not to be regarded in a restrictive sense. Without departing from the basic principles of the invention, those skilled in the art may perform the steps in different orders.

Based on the content proposed in the section Background Art, the state of an existing vehicle seat is controlled by physical buttons arranged near the seat, so the user must adjust the state of the vehicle seat by operating the physical buttons. This adjustment method causes many inconveniences in actual operations. For example, when a passenger who is not in the seat wants to adjust the seat, he or she must move close to the seat to operate the adjustment buttons for the seat. In addition, the passenger in the seat cannot adjust the state of the seat while keeping in a normal riding posture. Therefore, the passenger may need to get up and adjust the buttons for the seat multiple times to find the most comfortable seat state for himself/herself. To solve the above problems in the prior art, the invention provides a method for controlling a vehicle seat, wherein the control method may comprise acquiring a control signal from a first control terminal and selectively adjusting a state of the seat according to the control signal from the first control terminal, such that the user is allowed to adjust the state of the seat without operating the physical buttons, thereby greatly facilitating the user operation and improving the user experience. It should be noted that the first control terminal in the invention refers to a control terminal that is not provided on the vehicle seat, wherein the first control terminal has a touch screen for operating by a user to generate the control signal. In addition, the first control terminal may be arranged at another location inside the vehicle, or outside the vehicle.

A system for controlling a vehicle seat of the invention comprises a seat controller, wherein the seat controller may acquire a control signal from a first control terminal and selectively adjust different states of the seat according to the control signal from the first control terminal. Specifically, the seat controller may acquire the control signal from the first control terminal and selectively acquire other states of the seat according to the content of the control signal, so as to control the seat to selectively execute the control signal from the user in the case of taking multiple factors into consideration at the same time, such that a comfortable riding experience of the passenger can be effectively ensured while facilitating the user operation.

It may be understood by those skilled in the art that the seat controller may be a control module in a vehicle-mounted ECU (vehicle electronic control unit), or may be a separately provided seat controller, as long as the seat controller can carry out the method for controlling a vehicle seat of the invention. It should be noted that, preferably, the first control terminal is a mobile terminal and/or a HMI (vehicle human-machine interaction system) of the vehicle, the user may send the control signal by the mobile terminal and/or the HMI of the vehicle, and the seat controller can acquire the control signal sent by the mobile terminal and/or the HMI of the vehicle. The mobile terminal may be a mobile phone, a tablet, a notebook computer, etc. Of course, the mobile terminal may also be another mobile device of the user, as long as the mobile device can send the control signal to the seat controller. Further preferably, the user may acquire the current state of the seat by the mobile terminal, such that the user can adjust the state of the seat rationally with respect to the current state of the seat.

It should be noted that the method for controlling a vehicle seat of the invention will be described below in detail in the case of the first control terminal being a mobile phone, and at the same time, the invention also sets forth an application for a mobile terminal. Specifically, in a specific embodiment, the mobile phone is provided with an application for sending a control signal to the seat controller, and the user may also acquire the current states of all seats through the application. Of course, this description is obviously not limiting. In other words, obviously, the first control terminal may also be another terminal device, such as a central control screen of the vehicle. This change of the first control terminal does not deviate from the basic principles of the invention and therefore should fall within the scope of protection of the invention.

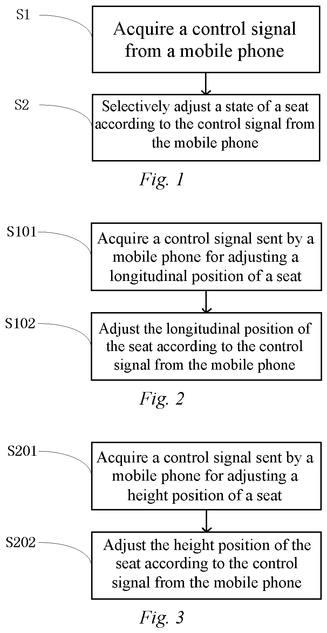

First, referring to Fig. 1, this figure shows a flowchart of the main steps of a method for controlling a vehicle seat of the invention. The main steps of the method for controlling a vehicle seat of the invention will be briefly described below with respect to Fig. 1. As shown in Fig. 1, the control method mainly comprises the following steps:
S1: acquiring a control signal from a mobile phone; and
S2: selectively adjusting a state of the seat according to the control signal from the mobile phone.

When a user wants to adjust the state of the seat, the user may send the control signal to the seat controller by the mobile phone. In step S1, the seat controller can acquire the control signal from the mobile phone and adjust the seat accordingly. Generally, the seat comprises a seat bottom, and a backrest, and in some cases, further comprises a leg rest. The adjustments of the longitudinal position and the height position of the seat, the adjustment of the folding angle of the backrest, and the adjustment of the position of the leg rest (if any) may be described as adjustable states of the seat in this application. Of course, it should be noted that although the seat described in this embodiment comprises a seat bottom, a backrest and a leg rest, and the longitudinal position and the height position of the seat bottom, the position of leg rest and the folding angle of the backrest each may be adjustable, a technician may obviously adjust the structure of the seat according to actual product demands by himself/herself, and at the same time, may also set some of the states of the seat to be adjustable states according to the actual product demands.

Further, In step S2, the seat controller can selectively adjust the state of the seat according to the control signal from the mobile phone. It should be understood that, since different influential factors need to be taken into consideration when the seat controller adjusts different states of the vehicle seat, when the seat controller acquires, by means of the mobile phone, the specific state that the user wants to adjust, the seat controller also needs to further determine whether other influential factors also need to be acquired when the state of the seat is adjusted, such that the seat controller can selectively adjust the different states of the seat, thereby avoiding influences such as discomfort on passengers caused by the adjustment while facilitating the user operation. For example, when the seat controller quickly adjusts the backrest of the seat to the initial position, if there is a passenger in the seat, it is likely to cause discomfort to the back of the passenger, thereby affecting the riding experience of the passenger.

Next, referring to Fig. 2, this figure shows a flowchart of steps of a first embodiment of the method for controlling a vehicle seat of the invention. The situation where the user wants to adjust the longitudinal position of the vehicle seat will be described below with respect to Fig. 2. As shown in Fig. 2, the control method comprises the following steps:
S101: acquiring a control signal sent by a mobile phone for adjusting the longitudinal position of the seat; and
S102: adjusting the longitudinal position of the seat according to the control signal from the mobile phone.

When the user wants to adjust the longitudinal position of the seat, the user may send the control signal for adjusting the longitudinal position of a designated seat to the seat controller by the mobile phone. It should be noted that the designated seat may be a seat in which the user is seated, or may be another seat of the vehicle. Specifically, in step S101, the seat controller can acquire the control signal sent by the mobile phone for adjusting the longitudinal position of the seat. It should be understood that, when the user adjusts the longitudinal position of the seat, the seat is only slowly translated, and this slow translation operation obviously will not cause discomfort to the passenger in the seat. Therefore, in the range of adjustable longitudinal positions of the seat, the seat controller can control the seat to directly make an adjustment according to the control signal without acquiring other influential factors, so as to allow the user to effectively adjust the spatial distribution inside the vehicle by the mobile phone. Accordingly, in step S102, the seat controller may directly adjust the longitudinal position of the seat according to the control signal sent by the mobile phone to facilitate the user in adjusting the longitudinal position of the seat without taking other states of the seat into consideration, and a comfortable riding experience of the passenger is effectively ensured, which in turn greatly improves the user experience.

It may be understood by those skilled in the art that the user may also send the control signal by the mobile phone to directly adjust the seat to an initial position. It should be noted that the initial position may be set by the technician himself/herself according to actual use requirements. At the same time, since the operation of directly adjusting the seat to the initial position only causes the translation of the seat, and this translation operation obviously would not cause discomfort to the passenger in the seat, the user can send the control signal by the mobile phone to quickly adjust the seat to the initial position without the need of the user to continuously send adjustment instructions until the seat is adjusted to a predetermined position, thereby greatly facilitating the user operation.

Next, referring to Fig. 3, this figure shows a flowchart of steps of a second embodiment of the method for controlling a vehicle seat of the invention. The situation where the user wants to adjust the height position of the vehicle seat will be described below with respect to Fig. 3. As shown in Fig. 3, the second embodiment of the control method comprises the following steps:
S201: acquiring a control signal sent by a mobile phone for adjusting the height position of the seat; and
S202: adjusting the height position of the seat according to the control signal from the mobile phone.

When the user wants to adjust the height position of the seat, the user may send the control signal for adjusting the height position of a designated seat to the seat controller by the mobile phone. It should be noted that the designated seat may be a seat in which the user himself/herself is seated, or may be another seat of the vehicle. Specifically, in step S201, the seat controller can acquire the control signal sent by the mobile phone for adjusting the height position of the seat. It should be understood that, when the user adjusts the height position of the seat, the seat is only slowly translated vertically, and this vertical slow translation operation obviously will not cause discomfort to the passenger in the seat. Therefore, in the range of adjustable height positions of the seat, the seat controller can control the seat to directly make an adjustment without acquiring other influential factors, such that the height of the seat can be more in line with the usage requirements of the passenger. Accordingly, in step S202, the seat controller may directly adjust the height position of the seat according to the control signal sent by the mobile phone to facilitate the user in adjusting the height position of the seat without taking other states of the seat into consideration, and a comfortable riding experience of the passenger is effectively ensured, which in turn greatly improves the user experience.

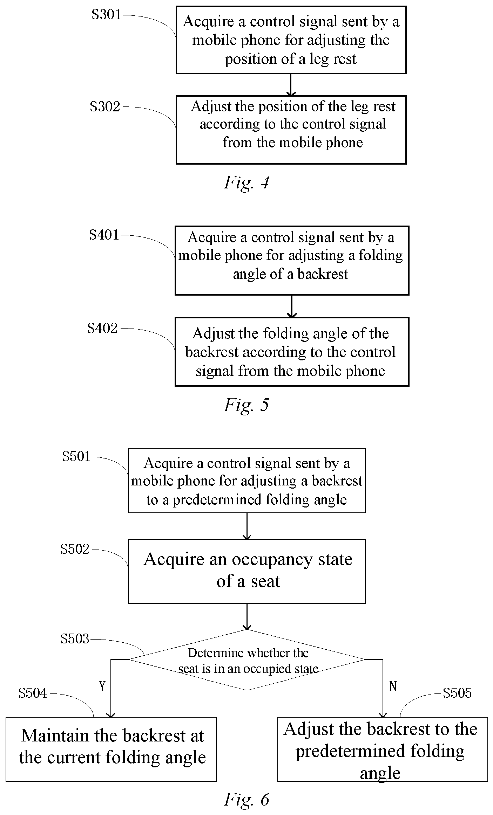

Next, referring to Fig. 4, this figure shows a flowchart of steps of a third embodiment of the method for controlling a vehicle seat of the invention. The situation where the user wants to adjust the position of the leg rest of the vehicle seat will be described below with respect to Fig. 4. As shown in Fig. 4, the third embodiment of the control method comprises the following steps:
S301: acquiring a control signal sent by a mobile phone for adjusting the position of the leg rest; and
S302: adjusting the position of the leg rest of the seat according to the control signal from the mobile phone.

When the user wants to adjust the position of the leg rest of the vehicle seat, the user may send the control signal for adjusting the position of the leg rest of a designated seat to the seat controller by the mobile phone. It should be noted that the designated seat may be a seat in which the user is seated, or may be another seat of the vehicle. Specifically, in step S301, the seat controller can acquire the control signal sent by the mobile phone to adjust the position of the leg rest. It should be understood that, when the user adjusts the position of the leg rest, the leg rest only moves slowly, such that the legs of the passenger also move slowly and this operation of slowly moving the passenger's legs will not cause discomfort to the passenger in the seat. Therefore, in the range of adjustable positions of the leg rest, the seat controller can control the leg rest to directly make an adjustment without acquiring other influential factors, such that the position of the leg rest can be more in line with the usage requirements of the passenger. Accordingly, in step S302, the seat controller may directly adjust the position of the leg rest according to the control signal sent by the mobile phone to facilitate the user in adjusting the position of the leg rest without taking other states of the seat into consideration, and a comfortable riding experience of the passenger is effectively ensured, which in turn greatly and effectively improves the user experience.

Next, referring to Fig. 5, this figure shows a flowchart of steps of a fourth embodiment of the method for controlling a vehicle seat of the invention. The situation where the user wants to adjust the folding angle of the backrest of the vehicle seat will be described below with respect to Fig. 5. As shown in Fig. 5, the fourth embodiment of the control method comprises the following steps:
S401: acquiring a control signal sent by a mobile phone for adjusting the folding angle of the backrest; and
S402: adjusting the folding angle of the backrest according to the control signal from the mobile phone.

When the user wants to adjust the folding angle of the backrest of the seat, the user may send the control signal for adjusting the folding angle of the backrest of a designated seat to the seat controller by the mobile phone. Of course, the designated seat may be a seat in which the user is seated, or may be another seat of the vehicle. Specifically, in step S401, the seat controller can acquire the control signal sent by the mobile phone to adjust the folding angle of the backrest of the seat. It should be understood that, when the user continuously and slowly adjusts the folding angle of the backrest of the seat, the backrest of the seat is only folded slowly, such that the back of the passenger may also move slowly with the backrest of the seat, and this operation of slowly changing the leaning angle will not cause discomfort to the passenger in the seat. Therefore, in the range of adjustable folding angles of the backrest, the seat controller can control the backrest to directly make an adjustment without acquiring other influential factors, such that the folding angle of the backrest of the seat can be more in line with the usage requirements of the passenger. It should be noted that the folding angle as described in this embodiment refers to the folding angle of the backrest of the seat relative to the seat bottom of the seat. Of course, the folding angle may also refer to the folding angle between the backrest of the seat and a chassis of the vehicle.

Further, in step S402, the seat controller may directly and slowly adjust the folding angle of the backrest according to the control signal sent by the mobile phone, and a comfortable riding experience of the passenger can be ensured without taking other states of the seat into consideration. In other words, the passenger in the seat can adjust the folding angle of the backrest when in a normal sitting posture. Since no discomfort will be caused to the passenger in the seat when the passenger slowly and continuously adjusts the folding angle of the backrest, the passenger in the seat can adjust the folding angle of the backrest of the seat while keeping in the normal sitting posture, such that the passenger can quickly adjust the backrest to the most comfortable position, which in turn greatly improves the riding experience of the passenger.

Next, referring to Fig. 6, this figure shows a flowchart of steps of a fifth embodiment of the method for controlling a vehicle seat of the invention. The situation where the user wants to adjust the folding angle of the backrest of the vehicle seat will be described below with respect to Fig. 6. As shown in Fig. 6, the fifth embodiment of the control method comprises the following steps:
S501: acquiring a control signal sent by a mobile phone for adjusting the folding angle of the backrest to a predetermined folding angle;
S502: acquiring an occupancy state of the seat;
S503: determining whether the seat is in an occupied state; if yes, proceeding to step S504; or if not, proceeding to step S505;
S504: maintaining the backrest at the current folding angle; and
S505: adjusting the backrest to the predetermined folding angle.

Further, When the user wants to directly adjust the backrest of the seat to the predetermined folding angle, the user may also send the control signal for adjusting the backrest of a designated seat to the predetermined folding angle to the seat controller by the mobile phone. It should be noted that the predetermined folding angle as described in this embodiment refers to an initial set angle of the backrest, that is, the user needs to directly adjust the backrest back to the initial position. Of course, the initial predetermined angle may be set by the technician himself/herself according to actual requirements. The seat is provided with a pressure sensor, and the seat controller can effectively determine whether the seat is in the occupied state by acquiring measured data from the pressure sensor. In addition, the designated seat may be a seat in which the user is seated, or may be another seat of the vehicle. Specifically, in step S501, the seat controller can acquire the control signal sent by the mobile phone to adjust the backrest of the seat to the predetermined folding angle. It should be understood that, unlike the fourth embodiment of the control method, when the backrest is directly folded to the predetermined angle, the folding speed of the backrest is very fast, and this operation of suddenly and quickly folding the backrest is likely to make the passenger feel uncomfortable, which affects the riding experience of the passenger. Therefore, it is necessary to further acquire other states of the seat when the user wants to directly adjust the backrest to the predetermined folding angle, so as to effectively ensure a comfortable ride experience of the passenger. It can be understood by those skilled in the art that although whether the seat is in the occupied state is detected by providing a pressure sensor on the seat in this embodiment, obviously, the technician may also detect whether the seat is in the occupied state by other means. For example, the technician may also detect the occupancy state of the seat by providing an infrared sensor on the seat.

Still further, the seat controller needs to acquire the occupancy state of the seat in step S502, that is, the seat controller needs to consider such a factor that whether there is a person seated in the seat. It should be understood that if no one is seated in the seat, directly folding the backrest of the seat to a predetermined position will not cause any impact on the passenger and also helps the user to bring the backrest into place once without the need of the user to continuously send adjustment instructions until the backrest is folded to a predetermined initial angle, thereby greatly facilitating the user operation. However, if there is a person seated in the seat, directly folding the backrest to the predetermined angle is likely to cause discomfort to the passenger in the seat. Therefore, in step S503, the seat controller needs to further determine whether the seat is in an occupied state. If the seat is in the occupied state, step S504 is carried out, that is, the seat controller controls the backrest to keep in the current folding position so as to effectively prevent the discomfort to the passenger in the seat due to an inadvertent operation by the user, which in turn affects the riding experience of the passenger. Preferably, the seat controller may also feed the reason why folding is not allowed back to the user by the mobile phone. Meanwhile, if the seat is in an unoccupied state, step S505 is carried out, that is, the seat controller controls the backrest to adjust same to the predetermined folding angle. When no one is seated in the seat, adjusting the backrest to the predetermined folding angle will not have any impact on the passenger. Therefore, the seat controller may control the backrest to directly fold same to the predetermined folding angle, such that the user can quickly return the backrest back to the initial folding angle, thereby effectively improving the operating experience of the user.

Finally, it should be noted that the above embodiments are all preferred embodiments of the invention and are not intended to limit the scope of protection of the invention. When those skilled in the art actually uses the invention, some of the steps may be added or deleted as appropriate, or the orders in which different steps are performed may be changed. This change does not go beyond the basic principles of the invention and falls within the scope of protection of the invention.

Heretofore, the preferred embodiments of the invention have been described with reference to the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A method for controlling a vehicle seat, **characterized by** comprising the following steps:
acquiring a control signal from a first control terminal; and
selectively adjusting a state of the seat according to the control signal from the first control terminal;
wherein the first control terminal has a touch screen for operating by a user to generate the control signal.

2. The method for controlling a vehicle seat according to claim 1, **characterized in that** the step of selectively adjusting the state of the seat according to the control signal from the first control terminal comprises:
adjusting a longitudinal position of the seat according to the control signal if the control signal is to adjust the longitudinal position of the seat.

3. The method for controlling a vehicle seat according to claim 1, **characterized in that** the step of selectively adjusting the state of the seat according to the control signal from the first control terminal comprises:
adjusting a height position of the seat according to the control signal if the control signal is to adjust the height position of the seat.

4. The method for controlling a vehicle seat according to claim 1, **characterized in that** the seat comprises a leg rest, and the step of selectively adjusting the state of the seat according to the control signal from the first control terminal comprises:
adjusting the position of the leg rest according to the control signal if the control signal is to adjust the position of the leg rest.

5. The method for controlling a vehicle seat according to claim 1, **characterized in that** the seat comprises a backrest, and the step of selectively adjusting the state of the seat according to the control signal from the first control terminal comprises:
adjusting a folding angle of the backrest according to the control signal if the control signal is to adjust the folding angle of the backrest.

6. The method for controlling a vehicle seat according to claim 1, **characterized in that** the seat comprises a backrest, and the control method further comprises:
acquiring an occupancy state of the seat before, during or after the step of acquiring the control signal from the first control terminal; and
the step of selectively adjusting the state of the seat according to the control signal from the first control terminal comprises:
adjusting the backrest to a predetermined folding angle if the control signal is to adjust a folding angle of the backrest and the seat is in an unoccupied state; and
maintaining the backrest at the current folding angle if the control signal is to adjust the folding angle of the backrest and the seat is in an occupied state.

7. The method for controlling a vehicle seat according to claim 6, **characterized in that** the seat is provided with a pressure sensor and/or an infrared sensor, and the step of acquiring the occupancy state of the seat comprises:
detecting the occupancy state of the seat by the pressure sensor and/or the infrared sensor.

8. The method for controlling a vehicle seat according to any one of claims 1 to 7, **characterized in that** the first control terminal is a mobile terminal and/or a vehicle human-machine interaction system; and the step of acquiring the control signal from the first control terminal specifically comprises:
acquiring the control signal from the mobile terminal and/or the vehicle human-machine interaction system.

9. A system for controlling a vehicle seat, **characterized by** comprising a seat controller; wherein
the seat controller is able to carry out a method for controlling a vehicle seat according to any one of claims 1 to 8.

10. An application for a mobile terminal, **characterized in that** the application is used to send to a vehicle a control signal for adjusting a state of a seat of the vehicle.
